Europäisches Patentamt

European Patent Office

Office européen des brevets

(11) Veröffentlichungsnummer: **0 082 953**
**A1**

# (12) EUROPÄISCHE PATENTANMELDUNG

(21) Anmeldenummer: 82110749.7

(22) Anmeldetag: 20.11.82

(51) Int. Cl.³: **H 04 N 3/22**

(30) Priorität: 18.12.81 DE 3150243

(43) Veröffentlichungstag der Anmeldung:
06.07.83 Patentblatt 83/27

(84) Benannte Vertragsstaaten:
AT BE CH FR GB IT LI NL SE

(71) Anmelder: LOEWE OPTA GMBH
Industriestrasse 11 Postfach 220
D-8640 Kronach(DE)

(72) Erfinder: Kraus, Heinz, Ing.grad.
Im Schulgarten 1
D-8643 Küps-Theisenort(DE)

(54) Verfahren und Schaltungsanordnung zur wahlweisen Änderung des Bildformates eines Fernsehbildes.

(57) Bei einem Verfahren zur wahlweisen Änderung des Bildformates eines Fernsehbildes in Relation zur Bildschirmfläche der Bildröhre ist es bekannt, die Hochspannung zu verringern und durch Änderung des Ladestromes des Speicherkondensators im Vertikalablenkkreis eine Auslenkung des Bildes in beiden Richtungen zu erwirken.

Um die durch die Verringerung der Hochspannung geringere Bildschärfe zu kompensieren, wird vorgeschlagen, die Dehnung des Bildes dadurch zu bewirken, daß der Tangenskorrekturkondensator um einen bestimmten Faktor verkleinert und die Vertikalbildamplitude vergrößert wird. Durch diese Maßnahme wird die Zeilenrücklaufzeit kürzer, so daß eine höhere Hochspannung an der Bildröhre anliegt und damit das Bild schärfer erscheint.

Fig. 1

0082953

Verfahren und Schaltungsanordnung zur wahlweisen
Änderung des Bildformates eines Fernsehbildes

Die Erfindung betrifft ein Verfahren und eine
Schaltungsanordnung zur Durchführung des Verfahrens
zur wahlweisen Änderung des Bildformates eines
Fernsehbildes in Relation zur Bildschirmfläche in
einem Fernsehempfangsgerät.

Aus Möhring "Schaltungstechnik der Loewe Opta-
Fernsehempfänger", 2. erweiterte Auflage, Seite 378,
ist es bekannt, zur Vergrößerung des Fernsehbildes
in Relation zum Normalbild, das deckungsgleich der
Bildschirmgröße ist, die Rücklauffrequenz des
Zeilentransformators zu verringern, d.h. die
Rücklaufzeit zu vergrößern. Es werden von dem Ende
einer Hilfswicklung auf den Zeilentransformator
über zusätzliche schaltbare Kontakte zwei in Serie
liegende Kondensatoren und ein Widerstand nach Masse
geschaltet. Durch diese Maßnahme nimmt die Amplitude
der Rücklaufspannung ab und damit auch die Bildröhrenhochspannung, so daß das Bild sowohl in Zeilen- als
auch in vertikaler Bildrichtung überschrieben wird.
Zur Erhöhung der Ausgangsspannung des Bildkippteils
für die Bildablenkung wird die Ladespannung an
dem Kondensator zur Bestimmung der Bildamplitude
durch Veränderung des Ladewiderstandes erhöht.

Derartige bekannte Schaltungsanordnungen weisen den
Nachteil auf, daß infolge der größeren Rücklaufzeit
die Bildröhrenhochspannung abnimmt. Dadurch lassen
Bildschärfe und Helligkeit merklich nach.

Der Erfindung liegt die Aufgabe zugrunde, ein Verfahren zu entwickeln und zur Durchführung des Verfahrens geeignete Schaltungen vorzuschlagen, die eine Vergrößerung des wiedergegebenen Fernsehbildes gegenüber der Bildschirmgröße ermöglichen, ohne daß dabei ein Helligkeits- und Bildschärfeverlust zu verzeichnen ist.

Die Aufgabe wird erfindungsgemäß nach der im Anspruch 1 wiedergegebenen Verfahrenslehre gelöst.

Vorteilhafte Verfahrensschritte sind in den Ansprüchen 2 bis 4 wiedergegeben.

Bevorzugte Schaltungsausführungen zur Durchführung des Verfahrens sind Gegenstand der Ansprüche 5 bis 12.

Für die Horizontalablenkung wird die Ablenkspule im Takt der Zeilenfrequenz an eine Quelle konstanter Spannung gelegt. Dabei entsteht ein sägezahnförmiger Strom. Fließt dieser Strom über einen mit der Ablenkeinheit in Serie geschalteten Kondensator, dem Tangenskorrekturkondensator, so fällt daran eine parabelförmige Spannung ab. Dadurch wird die an der Ablenkspule wirksame Hinlaufspannung am Zeilenanfang und am Zeilenende gegenüber der Zeilenmitte verringert. In Bildmitte bewirkt die Spannung also eine Erhöhung der Steilheit di/dt des Ablenkstromes und entsprechend am Hinlaufanfang sowie am Hinlaufende eine Verringerung dieses Wertes. Der Kurvenverlauf entspricht dem einer Tangensfunktion. Das Einfügen des Kondensators in Serie zur Ablenkspule beseitigt also bei richtiger Dimensionierung den Tangensfehler. Bei praktischen Schaltungen liegt die Serienresonanzfrequenz der Ablenkspule und des Tangenskorrekturkondensators bei ca. 4 bis 7 kHz. In diesem Zusammenhang spricht man von der Korrektur des symmetrischen Ablenkfehlers.

Ausgehend von diesen Gegebenheiten beim Schreiben einer
Zeile eines Fernsehbildes geht die Erfindung davon aus,
daß durch entsprechende Erhöhung der Winkelgeschwindigkeit des schreibenden Elektronenstrahls automatisch
eine Dehnung des Bildes in horizontaler Richtung erfolgt. Dies ist darauf zurückzuführen, daß durch
geeignete Maßnahmen der elektronische Strahl durch die
erhöhte Winkelgeschwindigkeit während des Abtastens
des Mittelbereiches größere Distanz zurücklegt. Auf
einfache Weise kann dieses durch einen kleineren
Tangenskorrekturkondensator bewirkt werden, wie nach
Patentanspruch 5. Die Verringerung des Tangenskorrekturkondensators hat zwar den Nachteil, daß infolge der
höheren Winkelgeschwindigkeit des abtastenden Elektronenstrahls das Bild im mittleren Bereich schneller
abgetastet wird und dadurch die Intensität des Leuchtphosphors nicht voll ausgenutzt wird. Dieser Nachteil
wird aber nach der Erfindung dadurch ausgeglichen, daß
infolge der geringeren Rücklaufzeit, die durch den
geänderten Tangenskorrekturkondensatorwert bedingt ist,
eine höhere Rücklaufspannung für die Anhebung der
Hochspannung sorgt, so daß das Bild schärfer erscheint.
Wird nun entsprechend Ansprüchen 3 und 4 zusätzlich der
Kontrast gleichzeitig beim Schreiben eines größeren
Bildes erhöht, so weist das Bild trotz Vergrößerung
praktisch eine erhöhte Leuchtintensität auf. Details
können deshalb besser wahrgenommen werden. Damit die
Auslenkung in horizontaler und vertikaler Richtung um
den gleichen Faktor erfolgt, muß der Vertikalablenkstrom proportional der Ablenkung in der Horizontalen
verändert werden. Geeignete Schaltungsmaßnahmen sind
in den Ansprüchen 6, 7 und 8 beschrieben.

Zur Ansteuerung der entsprechenden elektronischen
Schalter oder Relais kann ein Schalter am Gerät verwendet werden, der während der Darstellung des vergrößerten Bildes einen geschlossenen Kontakt aufweist,
so daß die entsprechenden Schaltströme während der
gesamten Einschaltzeit durch die Relaisspule fließen
oder den Schalttransistor leitend schalten. Entsprechend
kann auch der Kontrast durch die Überlagerung der
eingestellten Regelspannung von einer zweiten Spannung
während der gesamten Zeit erfolgen. Dies ist z.B. in
einfacher Weise durch eine Überlagerungsschaltung mittels
Entkoppeldioden  möglich. Moderne PAL-Farbdecoder-IC's,
wie der TDA 3500, lassen auf einfache Weise eine Anhebung
des Kontrastes durch Überlagerung der anliegenden Kontrastregelspannung zwischen 2 und 3,5 V durch Hinzufügen einer
zusätzlichen Spannung von ca. 0,5 V zu. Ebenso lässt  sich
in modernen Vertikalablenkkonzepten unter Verwendung z.B.
des integrierten Vertikalablenkbausteins TDA 1170 C durch
Änderung des am Differenzverstärkereingang liegenden
Vertikalamplitudenspannungssignals der Verstärkungsfaktor
des Vertikalamplitudenverstärkers auf einfache Weise einstellen. Es brauchen deshalb nur geringfügige Spannungsänderungen am Vergleichseingang des Differenzverstärkers
anzuliegen, um die gewünschte Änderung des Vertikalablenkstromes zu erreichen. Bei anderen Schaltungen kann
jedoch auch direkt der den Ablenkstrom beeinflussende,
in Serie zur Vertikalablenkspule liegende Widerstand
durch Parallelschalten eines weiteren Widerstandes während
der vergrößerten Wiedergabe des Bildes geändert werden.

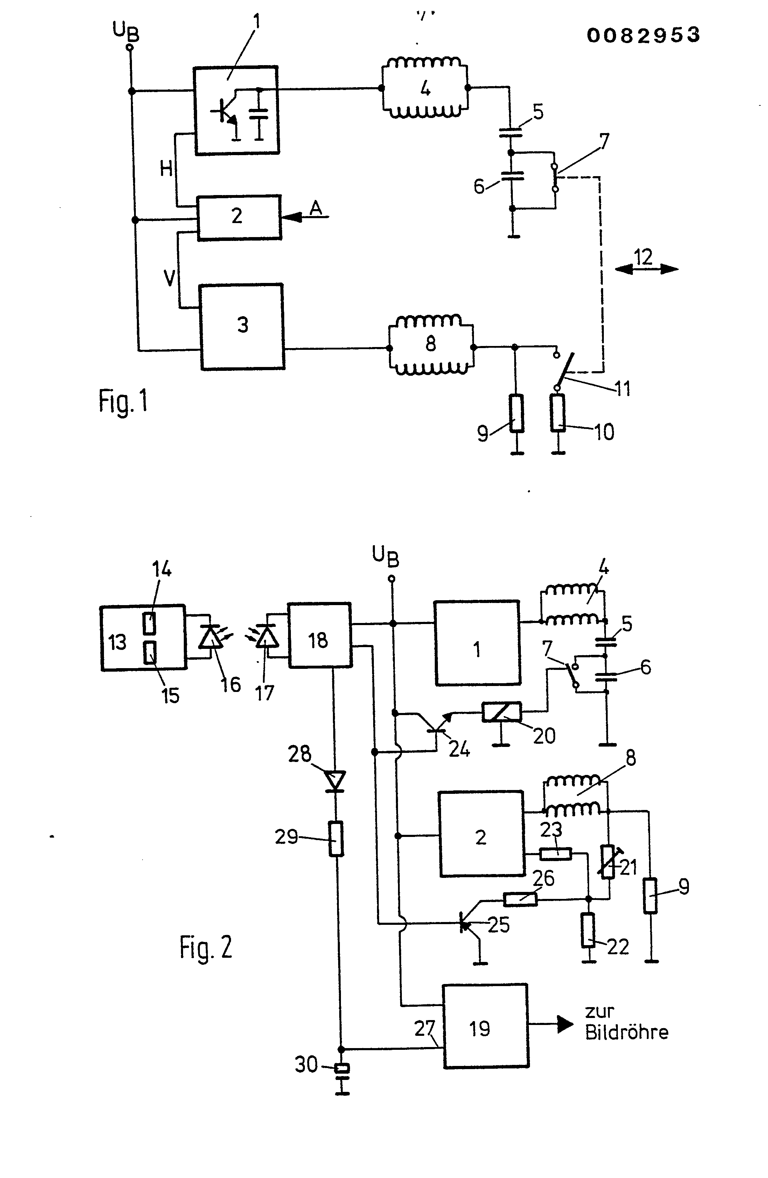

Die Erfindung wird nachfolgend anhand der Ausführungsbeispiele in den Fig. 1 und 2 näher erläutert.

In Fig. 1 sind in Form eines Blockschaltbildes eine
Horizontalablenkschaltung 1 mit einem Leistungsschalttranstor und einem parallelgeschalteten Ladekondensator
und ein den Leistungstransistor ansteuernder Horizontal/
Vertikal-Oszillator 3 dargestellt. Der Oszillator 2, von
dem ebenfalls Vertikalsynchronimpulse abgegeben werden,
steuert eine Vertikalablenkeinheit 3. Synchronisiert
wird der Horizontaloszillator von den empfangenen
demodulierten Synchronimpulsen über den Eingang A.
Der Einfachheit halber sind andere Schaltungsdetails
eines Fernsehempfangsgerätes nicht angeführt. Die Stromversorgung der drei Baugruppen erfolgt von getrennten
Spannungsquellen $U_B$. Die entsprechenden Betriebsspannungen
sind den jeweiligen Stufen angepaßt. Der Einfachheit
halber ist lediglich eine Betriebsspannungsquelle für
alle drei Baugruppen angegeben. Mit dem Ausgang des
Horizontalablenkgenerators 1 sind Horizontalablenkspulen 4 verbunden, zu denen in Reihe zur Korrektur
des symmetrischen Fehlers ein Tangenskorrekturkondensator 5 geschaltet ist. In Reihe mit diesem Kondensator
ist ferner ein weiterer zusätzlicher Kondensator 6 vorgesehen, zu dem parallel ein Schaltkontakt 7 angeordnet
ist. Der Kondensator 6 kann somit über den Schaltkontakt
entweder in Reihe mit dem Kondensator 5 geschaltet
werden und bewirkt damit eine Reduzierung des Korrekturkapazitätswertes oder aber abgeschaltet werden, so daß
über den in diesem Fall geschlossenen Kontakt 7 der
normale Kapazitätswert zur symmetrischen Korrektur anliegt.

Der Ausgang der Vertikalablenkschaltung liegt an den
Vertikalablenkspulen 8 an. Der über die Spule fließende
Ablenkstrom wird durch den in Serie geschalteten Widerstand 9 bestimmt. Um den Strom zu erhöhen und damit die
Amplitude zu verändern, ist parallel zum Widerstand 9 ein weiterer Widerstand 10 vorgesehen, der über
einen Kontakt 11 anschaltbar ist. Der Kontakt 11
wird synchron mit dem Kontakt 7 im umgekehrten
Sinne geschaltet. Dies ist durch die gestrichelt
eingezeichnete Linie und den Pfeil 12 symbolisiert.

Während der Kontakt 7 geschlossen ist, ist der
Kontakt 11 geöffnet. Dies bedeutet, daß eine Bildwiedergabe in normalem Bildformat erfolgt. Die
Horizontalablenkgeschwindigkeit wird ausschließlich
durch den symmetrischen Tangenskorrekturkondensator 5
bestimmt, der Vertikalablenkstrom ausschließlich durch
den Widerstand 9. Zum Zwecke der Wiedergabe eines
Fernsehbildes im vergrößerten Bildformat erfolgt nun
eine Umschaltung über das Schaltelement 12, das
sowohl den Kontakt 7 als auch den Kontakt 11 betätigt.
Der Kontakt 7 wird geöffnet, der Kontakt 11 geschlossen.
Dadurch wird in Reihe mit dem Tangenskorrekturkondensator 5 der weitere, die Gesamtkapazität vermindernde
Kondensator 6 geschaltet, und parallel zum Widerstand 9
der den Gesamtwiderstand vermindernde Widerstand 10.
Die Dimensionierung beider Kreise hat so zu erfolgen,
daß die Auslenkung symmetrisch erfolgt, so daß keine
Bildverzerrungen gegeben sind. Durch den höheren
Ablenkstrom wird automatisch die Bildamplitude wesentlich vergrößert. Ein Überschreiben über den Bildrand
hinaus ist in gewünschter Weise gegeben. Ebenso ist
durch die Verringerung der Kapazität des Tangenskorrekturkondensators eine Erhöhung der Winkelgeschwindigkeit
des abgetasteten Elektronenstrahls gegeben. Das Bild
wird in der Mitte gedehnt und im nicht sichtbaren Teil
außerhalb des Bildrandes zusammengezogen. Der gewünschte Effekt ist gegeben, nämlich eine Vergrößerung des
Bildes in beiden Richtungen. Der verminderte

- 7 -

0082953

Kapazitätswert des Tangenskorrekturkondensators 5,6
bewirkt auch eine geringfügige Zeilenrücklaufzeit
sowie eine höhere Rücklaufspannung, was eine Erhöhung
der Bildröhrenhochspannung zur Folge hat. Hierdurch
ist kein Helligkeits- und Schärfeverlust zu verzeichnen. Ebenso wird, wie in Fig. 2 dargestellt, durch
Anhebung des Kontrastes das Bild besser aufnehmbar.

Während in Fig. 1 ein Beispiel dargestellt ist, bei
dem es völlig offen ist, wie die Kontakte 7 und 11
ausgelegt sind, sind in Fig. 2 erfindungswesentliche
Schaltungsdetails dargestellt, und zwar in Verbindung
mit einem fernbedienten Gerät, wobei nur die wesentlichen Baugruppen eingezeichnet sind. Die übrigen
Baugruppen des Fernsehempfangsgerätes, die zur Erfindung
nicht beitragen, wurden nicht näher dargestellt.

Mit dem Infrarot-Fernbedienungsgeber 13 werden durch
Betätigung der Tasten 14 und 15 die Steuerbefehle an
eine Infrarot-Sendediode 16 gegeben, die die Umschaltung auf das jeweilige Bildformat auslösen.
Die Steuerbefehle werden von der Empfangsfotodiode 17
der Empfängerschaltung 18 aufgenommen, demoduliert und
als Steuerbefehle weitergegeben. Die zur Erzeugung des
größeren oder kleineren Bildformates notwendigen
Baugruppen sind die gleichen wie in Fig. 1:
eine Horizontalablenkschaltung 1, eine Vertikalablenkschaltung 2, die beide von einem hier nicht mehr
näher dargestellten Oszillator von Horizontalsynchronimpulsen und Vertikalsynchronimpulsen gesteuert werden.
Zusätzlich ist ein PAL/Decoder-Farbbaustein TDA 3500 mit
dem Bezugszeichen 19 dargestellt, in dem ein Kontrastregelkreis integriert ist. Die Ausgänge dieses Bausteins
steuern die Farbendstufen.

Der Ausgang der Horizontalablenkschaltung 1 ist mit
Horizontalablenkspulen 4 verbunden, mit denen in
Reihe ein Tangenskorrekturkondensator 5 und ein
weiterer Kondensator 6 geschaltet sind, zu dem
parallel ein Schaltkontakt 7 eines Relais 20 liegt.

In Reihe mit der Vertikalablenkschaltung sind
Vertikalablenkspulen 8 geschaltet. Der Ablenkstrom
wird bestimmt durch den Widerstand 9. Parallel zum
Widerstand 9 ist ein Stromfühler, bestehend aus dem
einstellbaren Widerstand 21 und dem gegen Masse
geschalteten Widerstand 22, angeordnet. Von dem
Abgriff wird eine dem durch den Widerstand 19
fließenden Strom proportionale Spannung abgegriffen
und über den Widerstand 23 dem Vergleicher zur Bestimmung des Verstärkungsfaktors des Vertikalverstärkers  - in einem IC, z.B. einem TDA 1170 S, -
zugeführt. Die Stromversorgung erfolgt über eine
Betriebsspannungsquelle $U_B$, die die einzelnen
Betriebsspannungen für die Baustufen liefert. Der
Einfachheit halber ist auch hier nur ein Stromversorgungsweg eingezeichnet.

Es sei angenommen, daß zum Zwecke der vergrößerten
Bildwiedergabe die Taste 15 betätigt wurde. Der
demodulierte empfangene Steuerbefehl bewirkt über
die Empfängerschaltung mit einer integrierten Flip-
Flop-Schaltung, daß der Transistor 24, der in Reihe
mit dem Relais 20 angeordnet ist, infolge des
Anliegens eines negativen Potentials gesperrt bleibt.
Der Kontakt 7 ist somit geöffnet. Der Serienresonanzkreis während des Zeilenhinlaufs bestimmt sich somit
aus der Horizontalablenkspule 4 und dem in Reihe
geschalteten Tangenskorrekturkondensator 5 und dem
weiteren Kondensator 6. Durch Verkleinerung der gesamten Tangenskorrekturkapazität erhöht sich die
Winkelgeschwindigkeit des abtastenden Strahls; das
Bild wird über den Kanal hinaus gedehnt. Da das
gleiche Steuersignal auch an der Basis des npndotierten Schalttransistors 25 liegt, wird dieser
leitend und bewirkt, daß der in Reihe geschaltete,
am Knotenpunkt des Stromfühlers für den Ablenkstrom
angeschlossene Widerstand 26 parallel zum Widerstand 22 geschaltet wird. Das Spannungsteilerverhältnis ändert sich damit. Der Regeleingang der
Differenzverstärkerstufe des integrierten Bausteins
erhält einen niedrigeren Spannungswert vorgegeben,
so daß der Verstärkungsfaktor des Vertikalablenkverstärkers erhöht wird. Über den Widerstand 9 fließt
dann der gewünschte größere Strom, wodurch die Bildamplitude vergrößert wird. Die Dimensionierung des
Horizontal- und des Vertikalkreises ist so aufeinander abgestimmt, daß die Auslenkung in beiden Richtungen symmetrisch erfolgt, damit keine Bildverzerrungen auftreten.

Von der Empfängerschaltung 18 liegt eine weitere
Spannungsinformation während der Darstellung des
vergrößerten Bildformates an dem Kontrastregeleingang 27 des PAL-Farbdecoders 19, z.B. ein TDA 3500,
an. Über die Entkopplungsdiode 28 fließt ein Strom und
ladet über den Ladewiderstand 29 den Ladekondensator 30
auf. Die anstehende Spannung wird der eigentlichen
eingestellten Kontrastregelspannung überlagert. Dies
bewirkt eine Veränderung des Spannungswertes während
der Darstellung des großformatigen Bildes, wodurch
der Kontrast erhöht wird. Das Bild erscheint nunmehr
in optimaler Qualität. Wird der Taster 14 betätigt
und damit der Schaltbefehl gegeben, auf normale

0082953

Bildübertragung umzuschalten  so bewirkt ein Leitendsteuern des Transistors 24 und ein Sperren des
Transistors 25,  daß der Kontakt 7 geschlossen und
der Widerstand 26 unwirksam geschaltet wird. Dadurch
sind ein normaler Vertikalablenkstrom und eine normale
symmetrische Korrektur durch den Tangenskorrekturkondensator 15 gegeben. Das Bildformat entspricht der
natürlichen Bildgröße des Bildschirmes.

Patentansprüche

1. Verfahren und Schaltungsanordnung zur wahlweisen
   Änderung des Bildformates eines Fernsehbildes in
   Relation zur Bildschirmfläche in einem Fernsehempfangsgerät, dadurch gekennzeichnet, daß sowohl
   die Winkelgeschwindigkeit des abtastenden Elektronenstrahls während der Zeilenhinlaufzeit als
   auch der Vertikalablenkstrom vergrößert bzw.
   verkleinert werden.

2. Verfahren nach Anspruch 1, dadurch gekennzeichnet,
   daß die Zeilenrücklaufzeit bei der Wiedergabe vergrößerter Bildformate geringfügig verkleinert und
   der Vertikalablenkstrom proportional derart vergrößert werden, daß die horizontalen und vertikalen Amplituden um den gleichen Faktor verändert
   werden.

3. Verfahren nach Anspruch 1 oder 2, dadurch gekennzeichnet, daß der Regelspannung für den Kontrast
   eine konstante Spannung bei der Wiedergabe des
   großformatigen Bildes aufaddiert wird.

4. Verfahren nach Anspruch 3, dadurch gekennzeichnet,
   daß die zusätzliche Regelspannung so bemessen ist,
   daß der Kontrast um ca. 10 bis 20 % erhöht wird.

5. Schaltungsanordnung für ein Verfahren nach einem
   der vorhergehenden Ansprüche, dadurch gekennzeichnet, daß in Reihe mit dem Tangenskorrekturkondensator
   ein weiterer Kondensator geschaltet ist, daß parallel
   zu diesem Kondensator ein Schalter angeordnet ist,
   daß parallel zu dem oder in Reihe mit dem den
   Vertikalablenkstrom bestimmenden Bauteil, z.B.
   Widerstand, ein weiteres den Ablenkstrom veränderndes,
   über einen Schaltkontakt anschaltbares Bauteil angeordnet ist, und daß beide Schaltkontakte synchron
   geschaltet werden.

6. Schaltungsanordnung nach Anspruch 5, dadurch gekennzeichnet, daß die Verstärkungsregelung des Vertikalverstärkers während der Wiedergabe eines großformatigen gedehnten Bildes derart erhöht wird, daß die
   Bildamplitude um denselben Faktor vergrößert wird
   wie die Horizontalamplitude.

7. Schaltungsanordnung nach Anspruch 5, dadurch gekennzeichnet, daß der Vertikalablenkstrom von einem in
   Reihe mit den Vertikalablenkspulen geschalteten
   Widerstand bestimmt wird, daß parallel hierzu ein weiterer
   Widerstand geschaltet ist und daß mit diesem ein
   Schaltkontakt angeordnet ist.

8. Schaltungsanordnung nach einem der vorhergehenden
   Ansprüche, dadurch gekennzeichnet, daß an die Stelle
   der Schaltkontakte elektronische Schalttransistoren
   treten, daß diese über eine am Gerät betätigte
   Taste oder über einen von einer Fernsteuerung abgegebenen Fernsteuerbefehl schalten.

9. Schaltungsanordnung nach Anspruch 5, dadurch gekennzeichnet, daß der mit dem Tangenskorrekturkondensator in Reihe geschaltete weitere Kondensator etwa die Hälfte der Kapazität des Tangenskorrekturkondensators aufweist.

10. Schaltungsanordnung nach Anspruch 5 oder 9, dadurch gekennzeichnet, daß in Reihe mit dem zum Tangenskorrekturkondensator parallelgeschalteten Kondensator ein Relaiskontakt liegt und daß das Relais durch einen Schaltbefehl steuerbar ist.

11. Schaltungsanordnung nach Anspruch 10, dadurch gekennzeichnet, daß das Relais bistabil ist und durch zwei Schaltimpulse ein- bzw. ausschaltbar ist.

12. Schaltungsanordnung nach Anspruch 10, dadurch gekennzeichnet, daß das Relais ein monostabiles Relais ist und ein Haltestrom über einen während der großformatigen Wiedergabe leitendgeschalteten Transistor fließt.

Fig. 1

Fig. 2

zur
Bildröhre

0082953

## EINSCHLÄGIGE DOKUMENTE

EP 82110749.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US - A - 3 132 283 (JAHNS)  \* Spalte 2, Zeilen 28-62 \*  -- | 1,5,9, 10 | H 04 N 3/22 |
| A | US - A - 4 028 726 (ARGY)  \* Zusammenfassung; Fig. 3; Spalte 6, Zeilen 33-64 \*  -- | 1,10 | |
| A | DE - B - 1 254 679 (LOEWE OPTA)  \* Spalte 4, Anspruch 1 \*  ---- | | |

RECHERCHIERTE SACHGEBIETE (Int. Cl. ³)

H 04 N 3/00

H 04 N 5/00

Der vorliegende Recherchenbericht wurde für alle Patentansprüche erstellt.

| Recherchenort | Abschlußdatum der Recherche | Prüfer |
|---|---|---|
| WIEN | 13-04-1983 | BENISCHKA |